# EUROPÄISCHE PATENTSCHRIFT

(11) **EP 1 320 499 B1**
(45) Veröffentlichungstag und Bekanntmachung des Hinweises auf die Patenterteilung: **16.03.2005**
(21) Anmeldenummer: 01971674.5
(22) Anmeldetag: 30.08.2001
(51) Int. Cl.: B65G 21/20

(54) **UMLENKEINRICHTUNG FÜR EIN FÖRDERMITTEL AN EINER TRANSPORTSTRECKE**
REDIRECTING DEVICE FOR A CONVEYING MEANS LOCATED ON A CONVEYING SECTION
DISPOSITIF D'INVERSION POUR ELEMENT DE TRANSPORT SUR UNE VOIE DE TRANSPORT

(30) Priorität: 15.09.2000 DE 10045742
(43) Veröffentlichungstag der Anmeldung: 25.06.2003
(73) Patentinhaber: ROBERT BOSCH GMBH, 70442 Stuttgart (DE)
(72) Erfinder: LEISNER, Ernst, 71638 Ludwigsburg (DE); SCHNEIDER, Ralph, 71336 Waiblingen (DE); SCHOLPP, Claus, 71706 Markgroeningen (DE)
(86) Internationale Anmeldenummer: PCT/DE2001/003307
(87) Internationale Veröffentlichungsnummer: WO 2002/022471

(56) Entgegenhaltungen:
- DE-A- 19 701 552

## Beschreibung

### Stand der Technik

Die Erfindung betrifft eine Umlenkeinrichtung für ein Fördermittel an einer Transportstrecke nach dem Oberbegriff des Anspruchs 1. Eine derartige bekannte Umlenkeinrichtung ist Bestandteil eines Transfersystems, welches mindestens aus einem Antriebskopf für das Fördermittel, der aus Profilstäben oder ähnlichem gebildeten Transportstrecke sowie der Umlenkeinrichtung besteht. Die Umlenkeinrichtung und der Antriebskopf sind bevorzugt an den Stirnseiten beziehungsweise Stirnflächen der Profilstäbe angeordnet. Die Aufgabe der Umlenkeinrichtung besteht darin, das Fördermittel durch ein- oder mehrfaches Umlenken insgesamt vom zuzuführenden Strang in den abzuführenden Strang des Fördermittels umzulenken. Bei den bekannten Umlenkeinrichtungen sind die Umlenkelemente in den Umlenkeinrichtungen als Umlenkrollen, Umlenkwalzen, verzahnte Rollen oder Ritzel realisiert. Wesentlich ist auch, daß bei den bekannten Umlenkeinrichtungen deren Gehäuse entweder als ein seitlich zu öffnendes Grundgehäuse mit einer Abdeckung, oder als aus zwei Gehäusehälften zusammengesetztes Gehäuse realisiert ist, so daß beim Einbau oder beim Wechsel eines beispielsweise als Kette ausgebildeten Fördermittels ein seitlicher Zugang zu den Gehäusen erforderlich ist.

Aus der DE 197 01 552 A1 ist eine Lineareinheit mit einem Längsprofil und zwei stirnseitig daran befestigten Gehäusen bekannt. Das aus einem U- und einem T-förmigen Bauteil gebildete Gehäuse dient als Antriebs- bzw. Spannkopf. Die mit dem Zugmittel zusammenwirkenden Rollen sind im T-förmigen Bauteil gelagert, was zumindest auf der Seite des Spannkopfs den Zugang zu Rolle und Zugmittel erschwert.

Beim Aufbau von komplexen Montage- bzw. Transfersystemen werden die einzelnen Transportstrecken jedoch aus Platzgründen üblicherweise sehr nah nebeneinander aufgebaut, so daß die Transportstrecken nur von oben zugänglich sind. Eine Wartung oder Reparatur des Fördermittels, das einen Ausbau und einen Wiedereinbau des Fördermittels in die Umlenkeinrichtung bzw. in das Gehäuse erforderlich macht, ist daher mit einem sehr großen Montageaufwand verbunden.

### Vorteile der Erfindung

Die erfindungsgemäße Umlenkeinrichtung für ein Fördermittel an einer Transportstrecke mit den kennzeichnenden Merkmalen des Anspruchs 1 hat demgegenüber den Vorteil, daß bei einer Reparatur oder Wartung des Fördermittels nur ein sehr geringer Montageaufwand erforderlich ist, da bei nebeneinander angeordneten Transportstrecken auf einen aufwendigen Abbau bzw. auf eine Demontage der Transportstrecken verzichtet werden kann. Dies wird erfindungsgemäß dadurch erreicht, daß das Umlenkelement samt Fördermittel von oben in das Gehäuse der Umlenkeinrichtung einführbar ist. Daher ist eine seitliche Zugänglichkeit an der Umlenkeinrichtung nicht mehr erforderlich. Um den Montageaufwand des Umlenkelements zusätzlich zu verringern, sind im Gehäuse Führungen beziehungsweise Ausnehmungen vorgesehen, in denen das Umlenkelement formschlüssig einschiebbar ist.

Weitere vorteilhafte Weiterbildungen der erfindungsgemäßen Umlenkeinrichtung für ein Fördermittel an einer Transportstrecke ergeben sich aus den Unteransprüchen. Durch die Verwendung von an der Abdeckung angeordneten Niederhaltern muß das Umlenkelement im Gehäuse nicht montiert beziehungsweise fixiert werden. Diese Funktion wird gleichzeitig von der Abdeckung mit übernommen, die das Umlenkelement im Gehäuse formschlüssig fixiert. Besonders einfach und kostengünstig ist die Abdeckung mit integrierter Niederhaltefunktion realisierbar, wenn die Abdeckung mit samt den Niederhaltern als einteiliges Bauteil ausgebildet ist. Das Umlenkelement selbst ist gegenüber den im Stand der Technik bekannten Umlenkrollen, Umlenkwalzen und so weiter besonders kostengünstig herstellbar, wenn es aus Kunststoff besteht. Das Fördermittel läuft dann direkt, das heißt in Kontakt mit dem Umlenkelement um. Die Ausbildung des Umlenkelements aus Kunststoff macht es darüber hinaus in einer besonders vorteilhaften Ausführungsform möglich, das Umlenkelement im wesentlichen halbkreisförmig auszubilden. Dadurch wird im Gegensatz zu den bekannten Umlenkrollen, Umlenkwalzen und so weiter in etwa die Hälfte des Durchmessers einer Umlenkrolle beziehungsweise Umlenkwalze an Bauraum eingespart. Dadurch baut eine Umlenkeinrichtung mit einem halbkreisförmig ausgebildeten Umlenkelement besonders kompakt.

### Zeichnung

Ein Ausführungsbeispiel der Erfindung ist in der Zeichnung dargestellt und wird nachfolgend näher erläutert. Es zeigen:

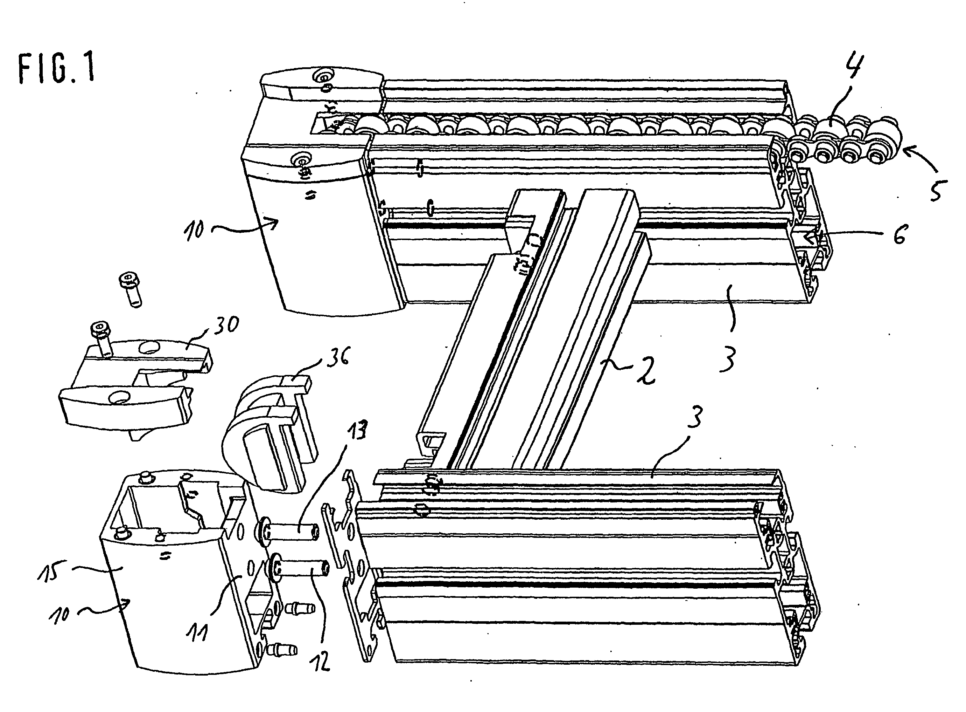

Figur 1 das Ende einer Transfersystems mit montierter und demontierter Umlenkeinrichtung in perspektivischer Ansicht und

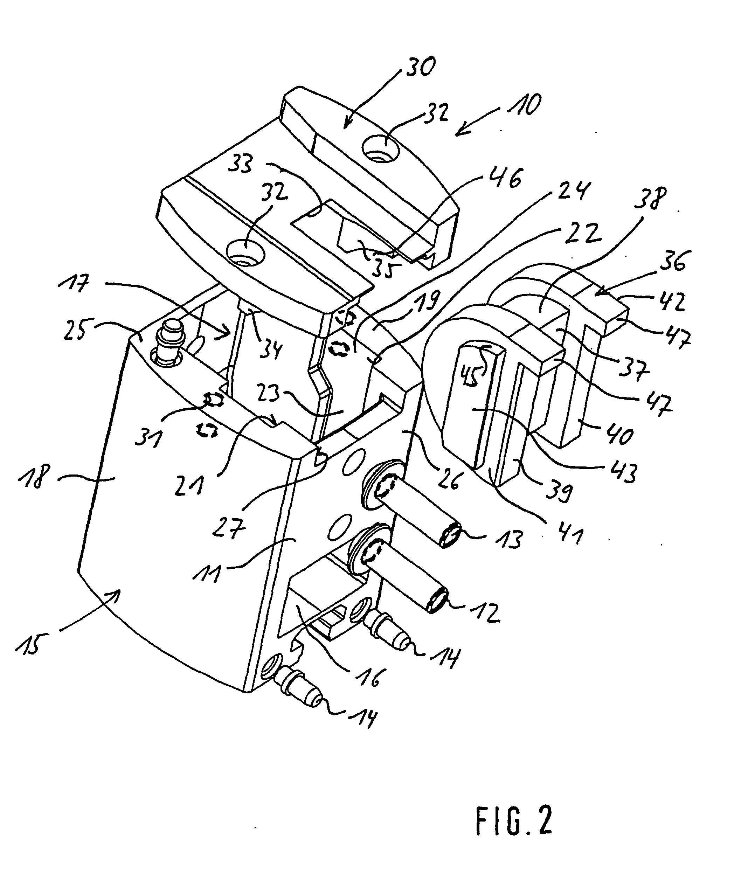

Figur 2 die erfindungsgemäße Umlenkeinrichtung gemäß Figur 1 in Explosionsdarstellung.

### Beschreibung des Ausführungsbeispiels

Die in den Figuren gezeigte Umlenkeinrichtung 10 ist Bestandteil eines nicht näher dargestellten Transfersystems, mittels dessen beispielsweise Werkstückträger oder ähnliches zwischen Bearbeitungsstationen befördert werden können. Das nur teilweise dargestellte Transfersystem weist parallel zueinander angeordnete, als Transportstrecke dienende Streckenprofile 3 auf, die mittels Querstreben 2 miteinander verbundenen sind. An einer Stirnseite eines Streckenprofils 3 ist jeweils eine Umlenkeinrichtung 10 an einer Montagefläche 11 mittels Schrauben 12, 13 unter Zwischenlage einer Anschlagplatte befestigbar. Positionierstifte 14 unterhalb der Schrauben 12, 13 dienen der Lageausrichtung der jeweiligen Umlenkeinrichtung 10 am Streckenprofil 3. Die Umlenkeinrichtung 10 dient dazu, ein endloses Fördermittel, wie etwa eine Transportkette 4, aus der Transportebene 5 in eine Rücklaufebene 6 umzulenken.

Die Umlenkeinrichtung 10 weist ein metallisches Gehäuse 15 auf, das bevorzugt im Druckgußverfahren hergestellt ist. Es kann einteilig ausgebildet sein, jedoch auch beispielsweise aus zwei miteinander verbundenen Gehäusehalbschalen bestehen. Unterhalb der Montagefläche 11 und in Höhe der Rücklaufebene 6 hat das Gehäuse 15 eine Aussparung 16, durch die die Transportkette 4 hindurchführbar ist. Das Gehäuse 15 besitzt in seinem Inneren einen Hohlraum 17. An den beiden gegenüberliegenden Seitenwänden 18, 19 des Gehäuses 15 ist jeweils eine als Führung dienende Aussparung 21, 22 ausgebildet, welche in einem unteren Bereich 23 die Form einer rechteckigen Nut aufweist, und welche in ihrem oberen Bereich 24 in ihrer Breite erweitert ist. Die Aussparungen 21, 22 reichen bis an die ebene Oberseite 25 des Gehäuses 15 heran. Die dem Streckenprofil 3 zugewandte Vorderwand 26 des Gehäuses 15 hat weiterhin eine Aussparung 27, die von der Oberseite 25 bis knapp unterhalb der Transportebene 5 reicht.

Die Oberseite 25 beziehungsweise der Hohlraum 17 des Gehäuses 15 ist durch eine bevorzugt aus Kunststoff hergestellte Abdeckkappe 30 verschließbar, welche zur Befestigung mittels Schrauben in Gewindebohrungen 31 des Gehäuses 15 Sacklochbohrungen 32 aufweist. Die Abdeckkappe 30 hat auf der dem Streckenprofil 3 beziehungsweise der Aussparung 27 zugewandten Seite eine der Größe der Transportkette 4 angepaßte Ausnehmung 33. Auf der Unterseite der Abdeckkappe 30 hat diese zwei Niederhalter 34, 35, die einstückig an der Abdeckkappe 30 angeformt sind. Die stegförmigen Niederhalter 34, 35 fluchten mit den Aussparungen 21, 22 in den Seitenwänden 18, 19 des Gehäuses 15.

In den Hohlraum 17 des Gehäuses 15 ist ein Umlenkelement 36 einsetzbar. Das einstückig aus einem verschleißfesten Kunststoff hergestellte Umlenkelement 36 weist einen halbkreis- beziehungsweise halbzylinderförmigen Grundkörper 37 mit einer Kontaktfläche 38 auf, auf der die Transportkette 4 im Betriebszustand entlanggleitet. Seitlich des Grundkörpers 37 sind ebenfalls im wesentlichen halbkreisförmig ausgebildete, den Grundkörper 37 überragende Führungsplatten 39, 40 für die Transportkette 4 angeordnet. Die Breite des Grundkörpers 37 samt der beiden Führungsplatten 39, 40 ist derart bemessen, daß diese der Breite zwischen den Seitenwänden 18, 19 im Gehäuse 15 entspricht. Auf den einander abgewandten Außenflächen 41, 42 der Führungsplatten 39, 40 sind ferner Führungsstege 43 angeformt, deren Form der Form der Aussparungen 21, 22 in den Seitenwänden 18, 19 des Gehäuses 15 angepaßt ist. Im dargestellten Ausführungsbeispiel haben die Führungsstege 43 eine in etwa rechteckige Außenform entsprechend dem unteren Bereich 23 der Aussparungen 21, 22, sowie eine bogenförmige, der Oberseite 25 des Gehäuses 15 zugewandte Niederhaltefläche 45. Die Form der Niederhalteflächen 45 ist der Form der Unterseiten 46 der beiden Niederhalter 34, 35 der Abdeckkappe 30 angepaßt. Zuletzt weisen die beiden Führungsplatten 39, 40 auf der der Vorderwand 26 des Gehäuses 15 zugewandten Seite Führungsnasen 47 auf, die der Aussparung 27 an der Vorderwand 26 des Gehäuses 15 angepaßt sind.

Um eine Transportkette 4 zu Wartungs- oder zu Reparaturzwecken an dem Transfersystem 1 auszutauschen ist es nicht erforderlich, das Gehäuse 15 vom Streckenprofil 3 abzumontieren. Es genügt, die Abdeckkappe 30 zu entfernen, und anschließend das Umlenkelement 36, welches mittels der Führungsstege 43 formschlüssig in den Aussparungen 21, 22 im Gehäuse 15 gelagert ist, aus dem Gehäuse 15 herauszuziehen. Das Wiedereinführen einer Transportkette 4 erfolgt dadurch, daß das eine Ende der Transportkette 4 um die Kontaktfläche 38 des Umlenkelements 36 und innerhalb des Gehäuses 15 bis zur Aussparung 16 hin geführt wird, wonach anschließend das Umlenkelement 36 mit seinen Führungsstegen 43 in die Aussparungen 21, 22 des Gehäuses 15 soweit nach unten gedrückt wird, bis die Führungsnasen 47 der Führungsplatten 39, 40 auf dem Grund der Aussparung 27 an der Vorderwand 26 des Gehäuses 15 aufliegen. Somit ist das Umlenkelement 36 in seiner vertikalen Position im Gehäuse 15 justiert.

Selbstverständlich kann durch eine entsprechende Formgebung beziehungsweise Tiefe der Aussparungen 21, 22 ebenfalls eine Höhenjustierung des Umlenkelements 36 im Gehäuse 15 erfolgen. Zuletzt wird die Abdeckkappe 30 wieder auf die Oberseite 25 des Gehäuses 15 verschraubt, wobei die beiden Niederhalter 34, 35 auf den Niederhalterflächen 45 der beiden Führungsstege 43 aufliegen und somit verhindern, daß bei einer vertikalen Belastung des Umlenkelements 36 in Richtung der Oberseite 25 das Umlenkelement 36 sich nach oben bewegen kann.

## Patentansprüche

1. Umlenkeinrichtung (10) für ein Fördermittel (4) an einer Transportstrecke mit einem, an einem Streckenelement (3) der Transportstrecke befestigbaren Gehäuse (15) mit einer Abdeckung (30) und mit wenigstens einem, im Gehäuse (15) angeordneten Umlenkelement (36) für das Fördermittel (4), das das Fördermittel (4) aus einer Transportebene (5) in eine Rücklaufebene (6) umlenkt, **dadurch gekennzeichnet, daß** das Gehäuse (15), ausgehend von seiner, von der Abdeckung (30) verschlossenen Oberseite (25), eine orthogonal zu den Ebenen (5, 6) verlaufende Ausnehmung (17) mit wenigstens einer Führung (21, 22) aufweist, in die das wenigstens eine Umlenkelement (36) wenigstens teilweise formschlüssig einschiebbar ist, und daß das Fördermittel (4) in die Ausnehmung (17) einführbar ist.

2. Umlenkeinrichtung nach Anspruch 1, **dadurch gekennzeichnet, daß** an der Abdeckung (30) wenigstens ein Niederhalter (34, 35) angeordnet ist, der das Umlenkelement (36) im Gehäuse (15) fixiert.

3. Umlenkeinrichtung nach Anspruch 2, **dadurch gekennzeichnet, daß** die Abdeckung (30) samt dem wenigstens einen Niederhalter (34, 35) als einteiliges Bauteil ausgebildet ist.

4. Umlenkeinrichtung nach einem der Ansprüche 2 bis 3, **dadurch gekennzeichnet, daß** das Umlenkelement (36) aus Kunststoff besteht und wenigstens einen Fortsatz (43) aufweist, der mit der wenigstens einen Führung ( 21, 22) zusammenwirkt.

5. Umlenkeinrichtung nach Anspruch 4, **dadurch gekennzeichnet, daß** das Umlenkelement (36) im wesentlichen halbkreisförmig ausgebildet ist.

6. Umlenkeinrichtung nach Anspruch 5, **dadurch gekennzeichnet, daß** das Umlenkelement (36) einen Grundkörper (37) hat, der beidseitig von je einer, einen Fortsatz (43) tragenden Führungsplatte (39, 40) begrenzt ist.

7. Umlenkeinrichtung nach einem der Ansprüche 4 bis 6, **dadurch gekennzeichnet, daß** das Umlenkelement (36) als einteiliges Bauteil ausgebildet ist.

## Claims

1. Redirection device (10) for a conveying means (4) located on a conveying section, having a housing (15) that can be fixed to a section element (3) of the conveying section and has a covering (30), and having at least one redirection element (36) arranged in the housing (15) for the conveying means (4), which redirects the conveying means (4) from a conveying plane (5) into a return plane (6), **characterized in that**, starting from its upper side (25), closed by the covering (30), the housing (15) has a recess (17) which runs orthogonally with respect to the planes (5, 6) and has at least one guide (21, 22), into which the at least one redirection element (36) can be at least partly pushed with a form fit, and **in that** the conveying means (4) can be inserted into the recess (17).

2. Redirection device according to Claim 1, **characterized in that** at least one hold-down (34, 35), which fixes the redirection element (36) in the housing (15), is arranged on the covering (30).

3. Redirection device according to Claim 2, **characterized in that** the covering (30) is formed together with the at least one hold-down (34, 35) as a one-piece component.

4. Redirection device according to either of Claims 2 and 3, **characterized in that** the redirection element (36) consists of plastic and has at least one extension (43) which interacts with the at least one guide (21, 22).

5. Redirection device according to Claim 4, **characterized in that** the redirection element (36) is substantially semicircular.

6. Redirection device according to Claim 5, **characterized in that** the redirection element (36) has a basic body (37) which is bounded on both sides in each case by a guide plate (39, 40) bearing an extension (43).

7. Redirection device according to one of Claims 4 to 6, **characterized in that** the redirection element (36) is formed as a one-piece component.

## Revendications

1. Dispositif de renvoi (10) pour un moyen de transport (4) sur une voie de transport, comprenant un boîtier (15) qui peut être fixé à un élément (3) de la voie et qui présente un couvercle (30) et au moins un élément de renvoi (36) pour le moyen de transport (4), disposé dans le boîtier (15) et qui renvoie le moyen de transport (4) d'un plan de transport (5) à un plan de retour (6),
**caractérisé en ce que**
le boîtier (15) présente, en partant de son côté supérieur (25) qui est fermé par le couvercle (30), une cavité (17) s'étendant perpendiculairement aux plans (5, 6) et munie d'au moins un guidage (21, 22) dans lequel l'au moins un élément de renvoi (36) peut être emboîté au moins partiellement par une liaison de forme, et le moyen de transport (4) peut être introduit dans la cavité (17).

2. Dispositif de renvoi selon la revendication 1,
**caractérisé en ce que**
sur le couvercle (30) est monté au moins un serre-flanc (34, 35) qui immobilise l'élément de renvoi (36) dans le boîtier (15).

3. Dispositif de renvoi selon la revendication 2,
**caractérisé en ce que**
le couvercle (30) constitue un composant d'une seule pièce avec l'au moins un serre-flanc (34, 35).

4. Dispositif de renvoi selon une des revendications 2 à 3,
**caractérisé en ce que**
l'élément de renvoi (36) est en matière plastique et présente au moins un prolongement (43) qui coopère avec l'au moins un guidage (21, 22).

5. Dispositif de renvoi selon la revendication 4,
**caractérisé en ce que**
l'élément de renvoi (36) est de forme sensiblement semi-circulaire.

6. Dispositif de renvoi selon la revendication 5,
**caractérisé en ce que**
l'élément de renvoi (36) comprend un corps de base (37) qui est limité sur chacune des deux côtés par une plaque de guidage (39, 40) qui porte un prolongement (43).

7. Dispositif de renvoi selon une des revendications 4 à 6,
**caractérisé en ce que**
l'élément de renvoi (36) est constitué par un composant d'une seule pièce.
